# EUROPEAN PATENT APPLICATION

(11) **EP 4 027 114 A1**
(43) Date of publication of application: **13.07.2022**
(21) Application number: 21209945.1
(22) Date of filing: 23.11.2021
(51) Int. Cl.: G01C 21/34, G08G 1/00, B60W 20/12

(54) **COMPUTING DEVICE, ROUTE DISPLAY DEVICE, AND CONTROL SYSTEM, FOR HYBRID VEHICLE**

(30) Priority: 23.12.2020 JP 2020214196
(71) Applicant: TOYOTA JIDOSHA KABUSHIKI KAISHA, Toyota-shi, Aichi-ken, 471-8571 (JP)
(72) Inventor: YOKOYAMA, Daiki, Toyota-shi, 471-8571 (JP); CHIBA, Hiroya, Toyota-shi, 471-8571 (JP); KAGEURA, Yoshiyuki, Toyota-shi, 471-8571 (JP); SHIMADA, Masanori, Toyota-shi, 471-8571 (JP); SAKAYANAGI, Yoshihiro, Toyota-shi, 471-8571 (JP)
(74) Representative: D Young & Co LLP

(57) **Abstract**

A control system (1) for a hybrid vehicle (10) with an internal combustion engine (11) and an electric motor (12) is disclosed. A zone in which the hybrid vehicle can move is divided in advance into a restriction zone RZ in which the operation of the internal combustion engine should be restricted, and an allowable zone AZ in which the operation of the internal combustion engine is permitted. A new route NR is computed if an SOC of a battery of the hybrid vehicle is lower than a predetermined threshold value while the hybrid vehicle is located within the restriction zone RZ when the hybrid vehicle moves along an initial computed route CR, or if the SOC is predicted to be lower than the threshold value while the hybrid vehicle is located within the restriction zone RZ when the hybrid vehicle is assumed to move along the initial computed route CR. The new route is different from the computed route and at least a part of the new route is located within the allowable zone. At least the new route is displayed by an HMI (118).

## Description

### FIELD

The present disclosure relates to a computing device, a route display device, and a control system, for a hybrid vehicle.

### BACKGROUND

It is known a hybrid vehicle, which includes an electric motor for generating a driving force, a battery for supplying electric power to the electric motor, a generator for supplying electric power to the battery, and an internal combustion engine for driving the generator, in which, the internal combustion engine is operated when the remaining capacity of the battery is reduced to a lower limit capacity value, and the operation of the internal combustion engine is stopped when it is determined that the current position of the hybrid vehicle is within an enhanced air pollution prevention area (See, for example, Patent Literature 1). In Patent Literature 1, the internal combustion engine is stopped and power generation is thus stopped when the hybrid vehicle is positioned within the enhanced air pollution prevention area. Thus, the remaining capacity of the battery will continue to decrease in the enhanced air pollution prevention area. However, when the remaining capacity of the battery is reduced to an operating limit quantity, the hybrid vehicle can no longer travel and escape from the enhanced air pollution prevention area. Therefore, in Patent Literature 1, the lower limit capacity value is set to be a large value so that the hybrid vehicle can escape from the enhanced air pollution prevention area.

On the other hand, a technology for computing and displaying an optimum route from a starting point to a destination (navigation system) is also known.

### [CITATIONS LIST]

### [PATENT LITERATURE]

[PTL 1] Japanese Unexamined Patent Publication (Kokai) No. H07(1995)-075210

### SUMMARY

### [TECHNICAL PROBLEM]

However, if the above-mentioned navigation system is combined with Patent Literature 1, the optimum route is not computed in consideration of whether the route remains within the enhanced air pollution prevention area. Therefore, when the hybrid vehicle travels along the optimum route, the remaining capacity of the battery may be reduced to the operating limit quantity. In this respect, electric power required for the travel of the hybrid vehicle may not be secured, and accordingly, the hybrid vehicle may not be able to escape from the enhanced air pollution prevention area. Although the lower limit capacity value is set to be a large value in Patent Literature 1, the capacity of the battery has an upper limit, and the hybrid vehicle cannot always escape from the enhanced air pollution prevention area.

### [SOLUTION TO PROBLEM]

According to the present disclosure, the followings are provided.

### [Configuration 1]

A route computing device for a hybrid vehicle equipped with an internal combustion engine and an electric motor, a zone in which the hybrid vehicle can move being divided in advance into a restriction zone in which the operation of the internal combustion engine should be restricted, and an allowable zone in which the operation of the internal combustion engine is permitted,
the route computing device being configured to compute a new route if an SOC of a battery of the hybrid vehicle is lower than a predetermined threshold value while the hybrid vehicle is located within the restriction zone when the hybrid vehicle moves along a computed route, or if the SOC is predicted to be lower than the threshold value while the hybrid vehicle is located within the restriction zone when the hybrid vehicle is assumed to move along the computed route, wherein the new route is different from the computed route and at least a part of the new route is located within the allowable zone.

### [Configuration 2]

A route display device for a hybrid vehicle equipped with an internal combustion engine and an electric motor, a zone in which the hybrid vehicle can move being divided in advance into a restriction zone in which the operation of the internal combustion engine should be restricted, and an allowable zone in which the operation of the internal combustion engine is permitted,
the route display device being configured to display a new route if an SOC of a battery of the hybrid vehicle is lower than a predetermined threshold value while the hybrid vehicle is located within the restriction zone when the hybrid vehicle moves along a computed route, or if the SOC is predicted to be lower than the threshold value while the hybrid vehicle is located within the restriction zone when the hybrid vehicle is assumed to move along the computed route, wherein the new route is different from the computed route and at least a part of the new route is located within the allowable zone.

### [Configuration 3]

The route display device according to configuration 2, wherein the route display device is configured to display the new route together with the computed route.

### [Configuration 4]

The route display device according to configuration 2, wherein the route display device is configured to display the new route without displaying the computed route.

### [Configuration 5]

The route display device according to any one of configurations 2 to 4, wherein the route display device is configured to display one of the computed route and the new route which is selected by an occupant of the hybrid vehicle, and not to display the other.

### [Configuration 6]

A control system for a hybrid vehicle equipped with an internal combustion engine and an electric motor, a zone in which the hybrid vehicle can move being divided in advance into a restriction zone in which the operation of the internal combustion engine should be restricted, and an allowable zone in which the operation of the internal combustion engine is permitted,
the control system comprising:
   a route recomputing unit configured to compute a new route if an SOC of a battery of the hybrid vehicle is lower than a predetermined threshold value while the hybrid vehicle is located within the restriction zone when the hybrid vehicle moves along a computed route, or if the SOC is predicted to be lower than the threshold value while the hybrid vehicle is located within the restriction zone when the hybrid vehicle is assumed to move along the computed route, wherein the new route is different from the computed route and at least a part of the new route is located within the allowable zone; and
a route display unit configured to display at least the new route.

### [Configuration 7]

The control system according to configuration 6, wherein the route display unit is configured to display the new route together with the computed route.

### [Configuration 8]

The control system according to configuration 6, wherein the route display unit is configured to display the new route without displaying the computed route.

### [Configuration 9]

The control system according to any one of configurations 6 to 8, wherein the route display unit is configured to display one of the computed route and the new route which is selected by an occupant of the hybrid vehicle, and not to display the other.

### [ADVANTAGEOUS EFFECTS OF INVENTION]

Electric power required for the movement of the hybrid vehicle can be secured.

### BRIEF DESCRIPTION OF DRAWINGS

FIG. 1 is a schematic overall view of a control system of an embodiment according to the present disclosure.
FIG. 2 is a schematic view of a restriction zone of an embodiment according to the present disclosure.
FIG. 3 is a schematic diagram explaining communication between a vehicle and a server in an embodiment according to the present disclosure.
FIG. 4 is a schematic diagram explaining communication between a vehicle and a server in another embodiment according to the present disclosure.
FIG. 5 is a schematic diagram showing an example of a new route in an embodiment according to the present disclosure.
FIG. 6 is a schematic diagram showing another example of the new route in the embodiment according to the present disclosure.
FIG. 7 is a flowchart for executing a driving control routine of an embodiment according to the present disclosure.
FIG. 8 is a flowchart for executing a route recomputing routine of an embodiment according to the present disclosure.
FIG. 9 is a flowchart for executing a route display routine of an embodiment according to the present disclosure.
FIG. 10 is a functional block diagram of a vehicle in an embodiment according to the present disclosure.
FIG. 11 is a functional block diagram of a server in an embodiment according to the present disclosure.

### DESCRIPTION OF EMBODIMENTS

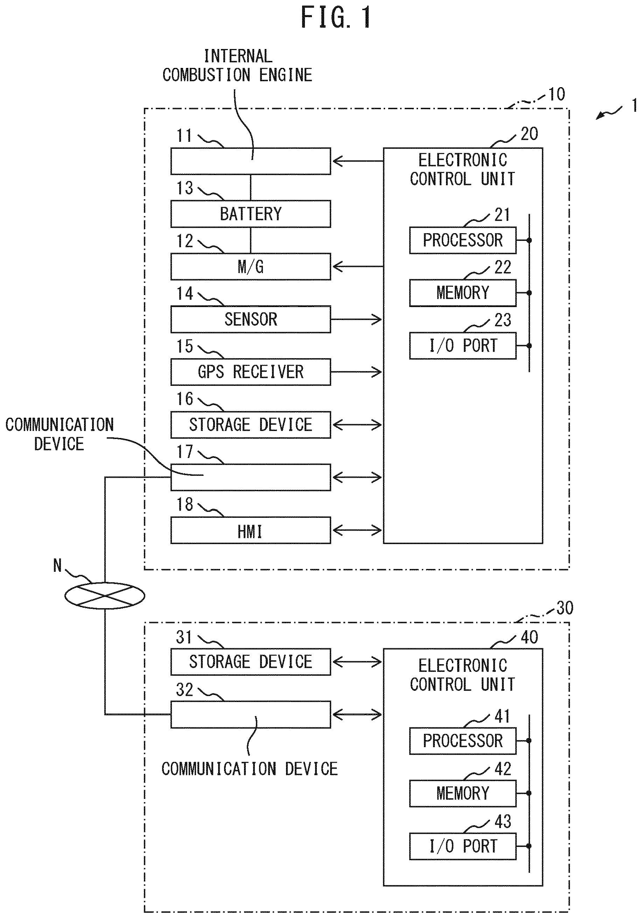

Referring to FIG. 1, a control system 1 for a hybrid vehicle of an embodiment according to the present disclosure includes a hybrid vehicle 10 and a server 30 outside of the hybrid vehicle 10.

The hybrid vehicle 10 of the embodiment according to the present disclosure includes an internal combustion engine 11, a motor generator (M/G) 12, a battery 13, at least one sensor 14, a GPS receiver 15, a storage device 16, a communication device 17, and an HMI (human machine interface) 18, and an electronic control unit 20.

The internal combustion engine 11 of the embodiment according to the present disclosure is composed of, for example, a spark-ignition engine or a compression-ignition engine. The internal combustion engine 11 (for example, a fuel injection valve, a spark plug, a throttle valve, etc.) is controlled based on a signal from the electronic control unit 20.

Further, the motor generator 12 of the embodiment according to the present disclosure operates as an electric motor or a power generator. The motor generator 12 is controlled based on a signal from the electronic control unit 20.

In the embodiment according to the present disclosure, an EV operation or an HV operation is selectively performed in the hybrid vehicle 10. In the EV operation of the embodiment according to the present disclosure, the motor generator 12 is operated as an electric motor while the internal combustion engine 11 is stopped. In this respect, an output of the motor generator 12 is transmitted to an axle. On the other hand, in the HV operation of the embodiment according to the present disclosure, the internal combustion engine 11 is operated while the motor generator 12 is operated as an electric motor. In this respect, in one example, the output of the internal combustion engine 11 and the output of the motor generator 12 are transmitted to the axle. In another example, the output of the motor generator 12 is transmitted to the axle, whereas the output of the internal combustion engine 11 is transmitted to a generator (not shown) to operate the generator. The electric power generated by the generator is sent to the motor generator 12 or the battery 13. In yet another example, a part of the output of the internal combustion engine 11 and the output of the motor generator 12 are transmitted to the axle, and the rest of the output of the internal combustion engine 11 is transmitted to the generator. The electric power generated by the generator is sent to the motor generator 12 or the battery 13. Further, in the embodiment according to the present disclosure, in the EV operation and the HV operation, a regenerative control operation using the motor generator 12 as a generator is performed, for example, during a deceleration operation. The electric power generated by the regenerative control operation is sent to the battery 13.

The battery 13 of the embodiment according to the present disclosure is charged by electric power from the motor generator 12 operating as a generator or a generator (not shown) driven by the internal combustion engine 11. In another embodiment (not shown), the battery 13 can also be charged by an external power source. On the other hand, in the embodiment according to the present disclosure, electric power is supplied from the battery 13 to the motor generator 12 that operates as an electric motor, the electronic control unit 20, and other in-vehicle devices.

The sensors 14 of the embodiment according to the present disclosure detect various raw data. The sensors 14 of the embodiment according to the present disclosure include, for example, a load sensor for detecting a required vehicle load represented by the amount of depression of an accelerator pedal, a throttle position sensor for detecting the throttle position of the internal combustion engine 11, an NOx sensor for detecting the NOx concentration in the exhaust gas of the internal combustion engine 11, a rotation speed sensor for detecting the rotation speed of the internal combustion engine 11, a voltmeter and a current meter for detecting the voltage and current of the battery 13, a speed sensor for detecting the speed of the vehicle 10, etc. Output signals of these sensors 14 are input to the electronic control unit 20.

The GPS receiver 15 of the embodiment according to the present disclosure receives a signal from GPS satellites, thereby detecting information representing an absolute position (for example, longitude and latitude) of the vehicle 10. The position information of the vehicle 10 is input to the electronic control unit 20.

Various data, in addition to map information, are stored in advance in the storage device 16 of the embodiment according to the present disclosure. The communication device 17 of the embodiment according to the present disclosure can be connected to a communication network N such as the Internet.

The HMI 18 of the embodiment according to the present disclosure exchanges information between an occupant(s) (including a driver) of the vehicle 10 and the control system 1. Specifically, the HMI 18 includes a notification function for giving, for example, visual, auditory, tactile, or olfactory notification to the occupants of the vehicle 10, and an input function for receiving inputs from the occupant of the vehicle 10. The HMI 18 includes, for example, a display, a lamp, a speaker, a vibrator, etc. for the notification function, and a touch panel, a button, a switch, etc. for the input function. In another embodiment (not shown), the HMI 18 has the notification function without the input function.

The electronic control unit 20 of the vehicle 10 of the embodiment according to the present disclosure includes one or more processors 21, one or more memories 22 and an input/output (I/O) port 23, which are communicably connected to one another by a bidirectional bus. The memories 22 include, for example, a ROM, a RAM, etc. Various programs are stored in the memories 22, and various functions are realized by executing these programs in the processors 21. The above-mentioned internal combustion engine 11, the motor generator 12, the sensors 14, the GPS receiver 15, the storage device 16, the communication device 17, and the HMI 18 are communicably connected to the input/output port 23 of the embodiment according to the present disclosure. Further, in the processors 21 of the embodiment according to the present disclosure, the SOC or charge rate of the battery 13 is computed based on, for example, the voltage and current of the battery 13.

Further, referring to FIG. 1, the server 30 of the embodiment according to the present disclosure includes a storage device 31, a communication device 32, and an electronic control unit 40.

The storage device 31 of the embodiment according to the present disclosure stores the position information of a predetermined restriction zone or allowable zone. The restriction zone and the allowable zone will be described later.

The communication device 32 of the embodiment according to the present disclosure can be connected to the communication network N. Therefore, the vehicle 10 and the server 30 can be connected to each other via the communication network N.

As in the electronic control unit 20 of the vehicle 10, the electronic control unit 40 of the server 30 of the embodiment according to the present disclosure includes one or more processors 41, one or more memories 42 and an input/output port 43, which are communicably connected to one another by a bidirectional bus. The above-mentioned storage device 31 and communication device 32 are communicably connected to the input/output port 43 of the embodiment according to the present disclosure.

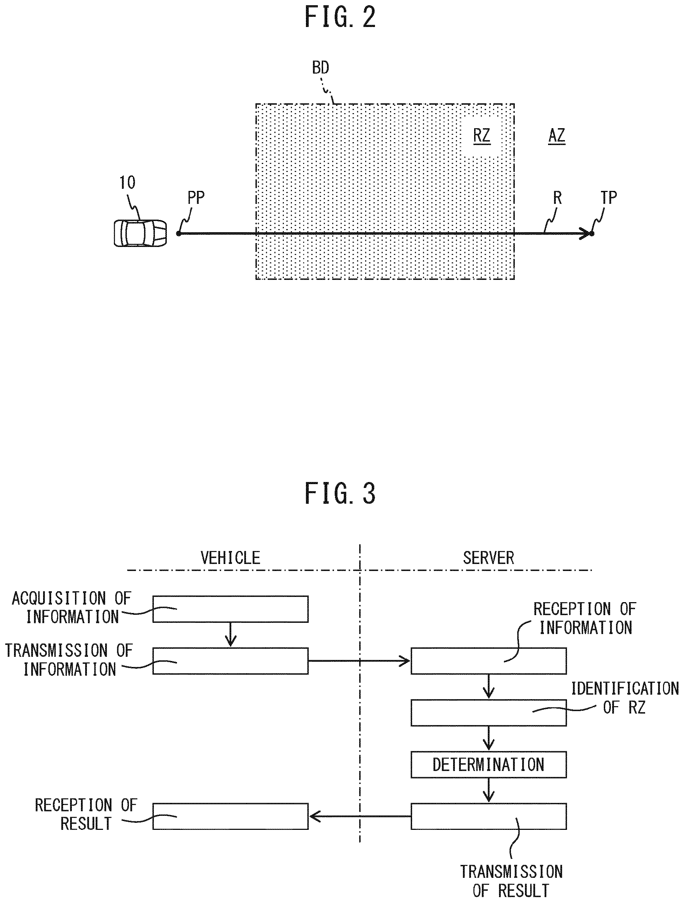

In the embodiment according to the present disclosure, a zone in which the vehicle 10 can move is divided in advance into a restriction zone in which the operation of the internal combustion engine is restricted, and an allowable zone in which the operation of the internal combustion engine is permitted. FIG. 2 schematically shows an example of a restriction zone RZ and an example of an allowable zone AZ of the embodiment according to the present disclosure. The restriction zone RZ of the embodiment according to the present disclosure is surrounded by a closed boundary BD. The restriction zone RZ is set in, for example, an urban area.

That is, in the embodiment according to the present disclosure, the operation of the internal combustion engine 11 is restricted when the vehicle 10 is located within the restriction zone RZ. In one example, the operation of the internal combustion engine 11 is prohibited. On the contrary, when the vehicle 10 is located within the allowable zone AZ, the operation of the internal combustion engine 11 is permitted.

Restrictions for the operation of the internal combustion engine 11 in the restriction zone RZ are based on a statutory or non-statutory rule. In one example, violating this rule will result in penalties such as fines. In another example, observing this rule will give incentives such as points.

In the embodiment according to the present disclosure, whether the vehicle 10 is located within the restriction zone RZ or the allowable zone AZ is determined.

When it is determined that the vehicle 10 is located within the allowable zone AZ, the EV operation or the HV operation is performed in the vehicle 10. In one example, the EV operation is performed when the required output of the vehicle 10 is smaller than a predetermined set output, and the HV operation is performed when the required output is larger than the set output. Further, the EV operation is performed when the SOC of the battery 13 is higher than a predetermined set SOC, and the HV operation is performed when the SOC is lower than the set SOC. In the HV operation in this respect, the generator is operated by the internal combustion engine 11 so as to increase the SOC of the battery 13. This prevents the SOC of the battery 13 from falling below a lower limit value. Note that the lower limit value is an SOC which makes recovery of the SOC extremely difficult if the SOC falls below the lower limit value.

On the contrary, when it is determined that the vehicle 10 is located within the restriction zone RZ, the EV operation is performed in the vehicle 10. That is, the operation of the internal combustion engine 11 is restricted.

In the embodiment according to the present disclosure, the determination as to whether the vehicle 10 is located within the restriction zone RZ is performed, for example, as follows. That is, as shown in FIG. 3, first, in the vehicle 10, the position information of the vehicle 10 at a current timing is acquired from the GPS receiver 15. Subsequently, the position information is transmitted from the vehicle 10 and received by the server 30. In the server 30, a restriction zone RZ in the vicinity of the vehicle 10 at the current timing is specified based on the position information of the vehicle 10, and the position information (for example, latitude and longitude) of the specified restriction zone RZ is extracted from the storage device 31. Subsequently, in the server 30, whether the vehicle 10 is located within the specified restriction zone RZ at the current timing is determined. Subsequently, a result of the determination is transmitted from the server 30 and received by the vehicle 10.

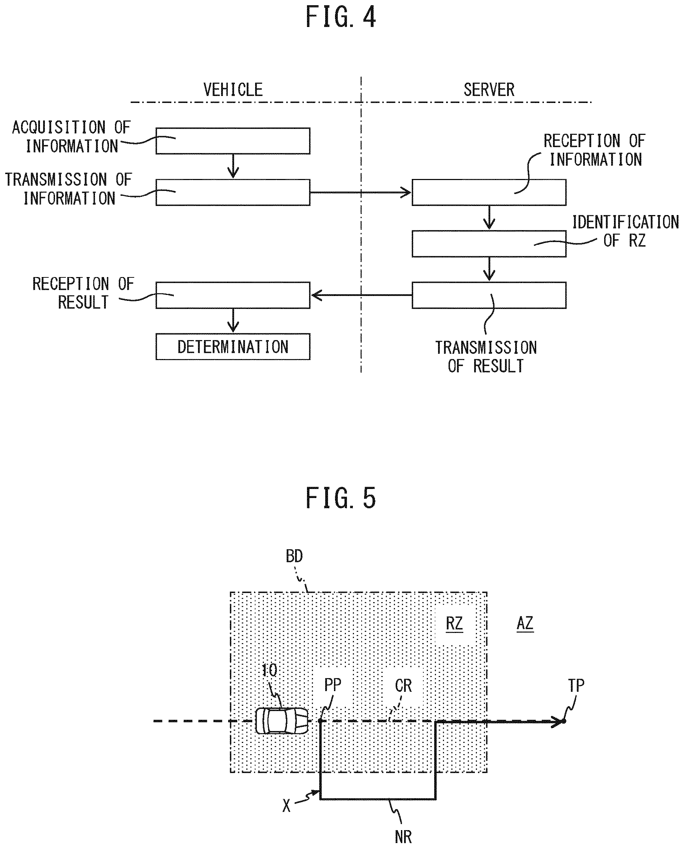

On the contrary, in another embodiment shown in FIG. 4, first, in the vehicle 10, the position information of the vehicle 10 at the current timing is acquired. Subsequently, the position information is transmitted from the vehicle 10 and received by the server 30. In the server 30, a restriction zone RZ in the vicinity of the vehicle 10 at the current timing is specified based on the position information of the vehicle 10, and the position information of the specified restriction zone RZ is extracted from the storage device 31. Subsequently, the information of the specified restriction zone RZ is transmitted from the server 30 and received by the vehicle 10. Subsequently, in the vehicle 10, whether the vehicle 10 is located within the specified restriction zone RZ at the current timing is determined.

In yet another embodiment, the position information of the restriction zone RZ is stored in the storage device 16 of the vehicle 10. In this respect, the vehicle 10 specifies the restriction zone RZ without communicating with the server 30, and determines whether the vehicle 10 is located within the restriction zone RZ.

On the other hand, in the embodiment according to the present disclosure, when a destination is input via the HMI 18, a route from the current position of the vehicle 10 to the destination is computed. In one example, a route which makes the travel distance or travel time shortest, is computed as the route. In the embodiment according to the present disclosure, the computed route is displayed by the HMI 18.

FIG. 2 shows an example of a route CR. In the example shown in FIG. 2, a current position PP is located within the allowable zone AZ. In another example, the current position PP is located within the restriction zone RZ. Further, in the example shown in FIG. 2, a target position or destination TP is located within the allowable zone AZ. In another example, the destination TP is located within the restriction zone RZ. Further, in the example shown in FIG. 2, a part of the route CR is located within the restriction zone RZ, and the rest is located within the allowable zone AZ. In another example, the entirety of the route CR is located within the restriction zone RZ.

By the way, in the embodiment according to the present disclosure, as described above, when it is determined that the vehicle 10 is located within the restriction zone RZ, the EV operation is performed. As the vehicle 10 continuously moves within the restriction zone RZ, the SOC of the battery 13 continues to decline, apart from the regenerative control operation. Thus, the SOC of the battery 13 may decline to the above-mentioned lower limit value. Therefore, the electric power required for the movement of the vehicle 10 may not be secured, and the vehicle 10 may not be able to escape from the restriction zone RZ.

Therefore, in the embodiment according to the present disclosure, if the SOC of the battery 13 of the vehicle 10 is lower than a predetermined threshold value SOCTH (>lower limit value) while it is located within the restriction zone RZ when the vehicle 10 moves along the computed route CR , a new route NR is computed, which route is different from the computed route CR and a part of which is located within the allowable zone RZ. In other words, the route is recomputed.

FIG. 5 shows an example of the new route NR. In the example shown in FIG. 5, the new route NR extends from the current position PP within the restriction zone RZ toward the allowable zone AZ, and extends within the allowable zone AZ, and thereafter, returns to the restriction zone RZ, and then extends toward the destination TP. Thus, the new route NR includes a portion X located within the allowable zone AZ. In another example, the new route NR extends from the current position PP toward the allowable zone AZ, and extends within the allowable zone AZ, and then extends toward the destination TP without returning to the restriction zone RZ.

As a result, if the vehicle 10 moves along the new route NR, the HV operation can be performed when the vehicle 10 is located within the allowable zone AZ, and the SOC of the battery 13 can be increased. Therefore, it is possible to secure the electric power required for the movement of the vehicle 10.

Further, in the embodiment according to the present disclosure, if the SOC of the battery 13 is predicted to be lower than the threshold value SOCTH while the vehicle 10 is located within the restriction zone RZ when the vehicle 10 is assumed to move along the computed route CR, a new route NR is computed, which route is different from the computed route CR and at least a part of which is located within the allowable zone AZ.

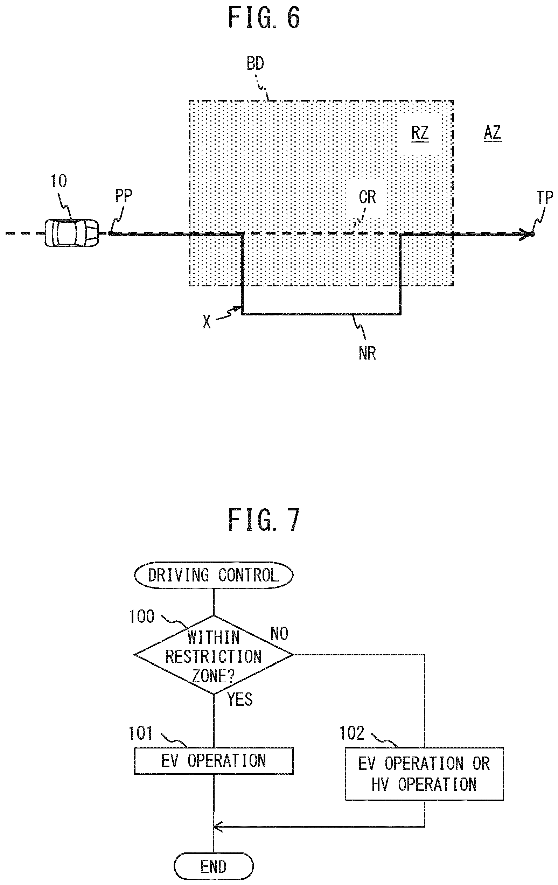

FIG. 6 shows another example of the new route NR. In the example shown in FIG. 6, the new route NR extends from the current position PP within the allowable zone AZ toward the restriction zone RZ, and then extends toward the allowable zone AZ and extends within the allowable zone AZ, and thereafter, returns to the restriction zone RZ, and then, extends toward the destination TP. Thus, the new route NR includes a portion X located within the allowable zone AZ.

In another example, the new route NR extends from the current position PP within the allowable zone AZ and extends within the allowable zone AZ, and then, enters the restriction zone RZ, and thereafter, extends toward the destination TP. In yet another example, the new route NR extends from the current position PP toward the restriction zone RZ and then toward the allowable zone AZ after extending within the restriction zone RZ, and then, extends toward the destination TP after extending within the allowable zone AZ, without returning to the restriction zone RZ. In yet another example, the new route NR extends from the current position PP toward the destination TP without entering the restriction zone RZ.

As a result, also in this respect, if the vehicle 10 moves along the new route NR, the HV operation can be performed when the vehicle 10 is located within the allowable zone AZ, and the electric power required for the movement of the vehicle 10 can be secured.

The new route NR of the embodiment according to the present disclosure is computed based on, for example, the current position PP, the destination TP, the position information of the restriction zone RZ, and the SOC of the battery 13, so that the SOC of the battery 13 does not decline to the lower limit value when the vehicle 10 is located within the restriction zone RZ.

In the examples shown in FIGS. 5 and 6, the new route NR partially matches and partially differs from the computed route CR between the current position PP and the destination TP. In another example, the new route NR is entirely different from the computed route CR. Further, in the examples shown in FIGS. 5 and 6, the destination TP is located within the allowable zone AZ. In another example, the destination TP is located within the restriction zone RZ. Further, in the example shown in FIG. 6, the current position PP is located within the allowable zone AZ. In another example, the current position PP is located within the restriction zone RZ.

The computed route CR may be a route which enables the vehicle 10 to reach the destination TP without reducing the SOC to the lower limit value, when the route CR was computed. However, the SOC may decline to the lower limit value due to subsequent changes of a situation. Even in such a case, according to the embodiment according to the present disclosure, the electric power required for the movement of the vehicle 10 is secured.

Note that the SOC of the battery 13 is predicted by, for example, integrating the decrease and increase in the SOC per unit distance or unit time. The decrease in the SOC is determined depending on, for example, the power consumption of the motor generator 12 operating as an electric motor, the power consumption of an air conditioner, an infotainment system, etc., and the like. The power consumption of the motor generator 12 is determined depending on, for example, the speed of the vehicle 10, the gradient of the road surface, and the like. The increase in the SOC is determined depending on, for example, the power generated by the generator, the power generated by the regenerative control operation, and the like.

On the other hand, in the embodiment according to the present disclosure, when the new route NR is computed, at least the new route NR is displayed by the HMI 18. Specifically, in the embodiment according to the present disclosure, the new route NR is displayed together with the computed route CR. In this way, the occupants or driver of the vehicle 10 can compare the computed route CR with the new route NR

In the embodiment according to the present disclosure, subsequently, when the occupant of the vehicle 10 selects one of the computed route CR and the new route NR via the HMI 18, the selected route continues to be displayed, and the unselected route stops to be displayed. That is, for example, when the new route NR is selected, the new route NR is displayed by the HMI 18, and the display of the computed route CR by the HMI 18 is stopped. As a result, the route that the occupant is trying to see is clearly displayed.

In another example, when the new route NR is computed, the computed route CR and the new route NR are continuously displayed.

In yet another example, when the new route NR is computed, the new route NR is displayed without displaying the computed route CR. In other words, the route displayed by the HMI 18 is switched from the computed route CR to the new route NR

Note that, in the case where the vehicle 10 is a self-driving vehicle, in one example, when a new route NR is computed, the vehicle 10 moves along the new route NR. In another example, the vehicle 10 moves along one of the computed route CR and new route NR, which is selected by an occupant or operator.

FIG. 7 shows a routine for executing a driving control operation for the vehicle 10 in the embodiment according to the present disclosure. This routine is repeatedly executed in, for example, the electronic control unit 20 of the vehicle 10.

Referring to FIG. 7, first, at step 100, whether the vehicle 10 is located within the restriction zone RZ is determined. When it is determined that the vehicle 10 is located within the restriction zone RZ, the process shifts from step 100 to step 101, and the EV operation is performed. That is, the operation of the internal combustion engine 11 is restricted. On the contrary, when it is determined that the vehicle 10 is located within the allowable zone AZ, the process shifts from step 100 to step 102, and the EV operation or the HV operation is performed.

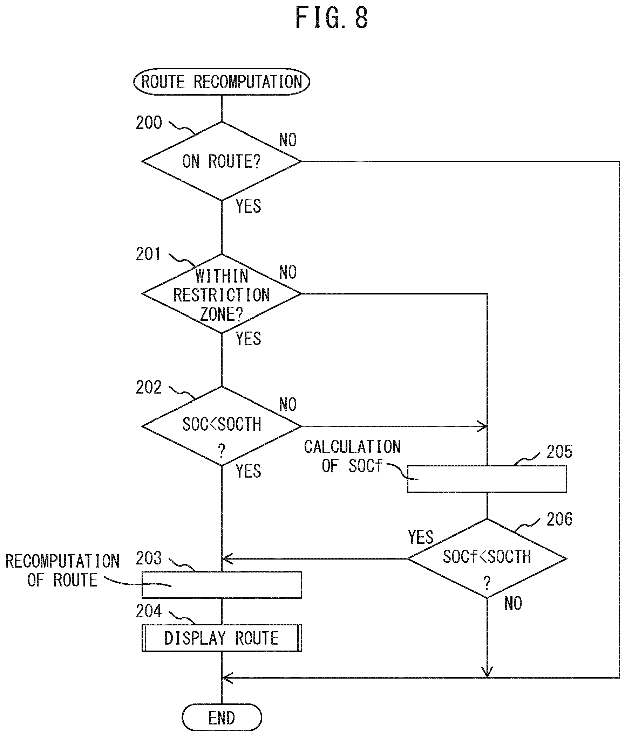

FIG. 8 shows a routine for recomputing the route in the embodiment according to the present disclosure. This routine is repeatedly executed in, for example, the electronic control unit 20 of the vehicle 10.

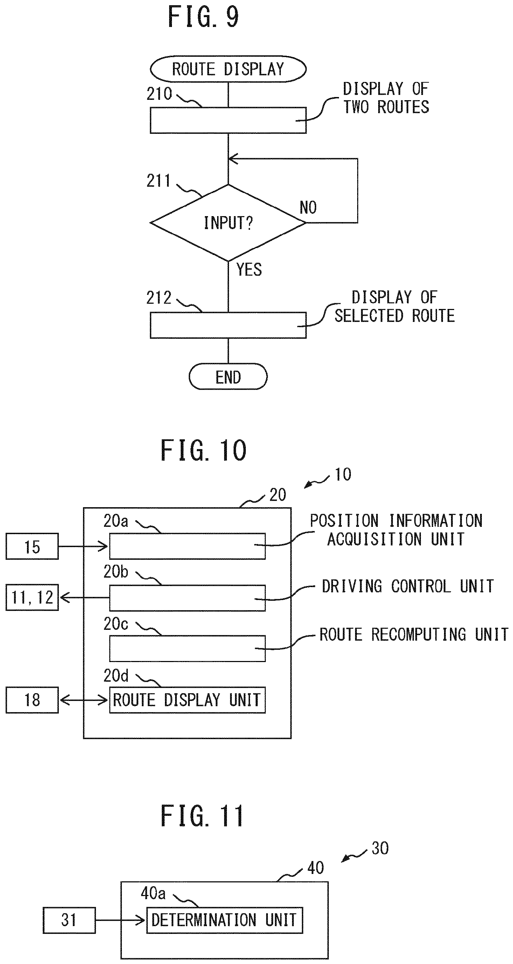

Referring to FIG. 8, first, at step 200, whether the vehicle 10 is moving along the computed route CR is determined. If the vehicle 10 is not moving along the computed route CR, the processing routine is terminated. When it is determined that the vehicle 10 is moving along the computed route CR, the process then shifts to step 201, and whether the vehicle 10 is located within the restriction zone RZ is determined. When it is determined that the vehicle 10 is located within the restriction zone RZ, the process then shifts to step 202, and whether the SOC of the battery 13 is lower than the threshold value SOCTH is determined. When it is determined that SOC<SOCTH, the process then shifts to step 203, and the route is recomputed. That is, the new route NR is computed. At the following step 204, a route display routine is executed. This routine is shown in FIG. 9.

Referring to FIG. 9, at step 210, the computed route CR and the new route NR are displayed by the HMI 18. At the following step 211, whether the selection of the route to be displayed has been input to the HMI 18 is determined. Step 211 is repeated until an input to the HMI 18 occurs. When the input to the HMI 18 occurs, the process shifts to step 212, and the selected route is displayed by the HMI 18.

Referring again to FIG. 8, when it is determined at step 201 that the vehicle 10 is not located within the restriction zone RZ, and when it is determined at step 202 that SOC≥SOCTH, the process then shifts to step 205. At step 205, a predicted value SOCf of the SOC of the battery 13 when the vehicle 10 is located within the restriction zone RZ, assuming that the vehicle 10 moves along the computed route CR, is computed. At the following step 206, whether the predicted value SOCf is lower than the threshold value SOCTH is determined. When it is determined that SOCf<SOCTH, the process then shifts to step 203. On the contrary, when it is determined that SOCf≥SOCTH, the processing cycle is terminated.

FIG. 10 shows a functional block diagram of the vehicle 10 of the embodiment according to the present disclosure. Referring to FIG. 10, the electronic control unit 20 of the vehicle 10 of the embodiment according to the present disclosure includes a position information acquisition unit 20a, a driving control unit 20b, a route recomputing unit 20c, and a route display unit 20d.

In the example shown in FIG. 10, the position information acquisition unit 20a acquires the position information of the vehicle 10 from the GPS receiver 15 and transmits it to the server 30. The driving control unit 20b selectively performs the EV operation or the HV operation. The route recomputing unit 20c determines whether a new route should be computed, and computes a new route NR when it is determined that the new route should be computed. The route display unit 20d displays at least the new route NR by the HMI 18 when the new route NR is computed.

On the other hand, FIG. 11 shows a functional block diagram of the server 30 of the embodiment according to the present disclosure. Referring to FIG. 11, the electronic control unit 40 of the server 30 of the embodiment according to the present disclosure includes a determination unit 40a. In the example shown in FIG. 11, the determination unit 40a determines whether the vehicle 10 is located within the restriction zone RZ, and transmits a result of the determination to the vehicle 10.

In another embodiment shown in FIG. 5, the electronic control unit 20 of the vehicle 10 further includes a determination unit similar to the determination unit 40a described above.

This application claims the benefit of Japanese Patent Application No. 2020-214196, the entire disclosure of which is incorporated by reference herein.

### REFERENCE SIGNS LIST

- 1: control system
- 10: hybrid vehicle
- 11: internal combustion engine
- 12: motor generator
- 20: electronic control unit of vehicle
- 30: server
- 40: electronic control unit of server

## Claims

1. A route computing device for a hybrid vehicle equipped with an internal combustion engine and an electric motor, a zone in which the hybrid vehicle can move being divided in advance into a restriction zone in which the operation of the internal combustion engine should be restricted, and an allowable zone in which the operation of the internal combustion engine is permitted,
the route computing device being configured to compute a new route if an SOC of a battery of the hybrid vehicle is lower than a predetermined threshold value while the hybrid vehicle is located within the restriction zone when the hybrid vehicle moves along a computed route, or if the SOC is predicted to be lower than the threshold value while the hybrid vehicle is located within the restriction zone when the hybrid vehicle is assumed to move along the computed route, wherein the new route is different from the computed route and at least a part of the new route is located within the allowable zone.

2. A route display device for a hybrid vehicle equipped with an internal combustion engine and an electric motor, a zone in which the hybrid vehicle can move being divided in advance into a restriction zone in which the operation of the internal combustion engine should be restricted, and an allowable zone in which the operation of the internal combustion engine is permitted,
the route display device being configured to display a new route if an SOC of a battery of the hybrid vehicle is lower than a predetermined threshold value while the hybrid vehicle is located within the restriction zone when the hybrid vehicle moves along a computed route, or if the SOC is predicted to be lower than the threshold value while the hybrid vehicle is located within the restriction zone when the hybrid vehicle is assumed to move along the computed route, wherein the new route is different from the computed route and at least a part of the new route is located within the allowable zone.

3. The route display device according to claim 2, wherein the route display device is configured to display the new route together with the computed route.

4. The route display device according to claim 2, wherein the route display device is configured to display the new route without displaying the computed route.

5. The route display device according to any one of claims 2 to 4, wherein the route display device is configured to display one of the computed route and the new route which is selected by an occupant of the hybrid vehicle, and not to display the other.

6. A control system for a hybrid vehicle equipped with an internal combustion engine and an electric motor, a zone in which the hybrid vehicle can move being divided in advance into a restriction zone in which the operation of the internal combustion engine should be restricted, and an allowable zone in which the operation of the internal combustion engine is permitted,
the control system comprising:
a route recomputing unit configured to compute a new route if an SOC of a battery of the hybrid vehicle is lower than a predetermined threshold value while the hybrid vehicle is located within the restriction zone when the hybrid vehicle moves along a computed route, or if the SOC is predicted to be lower than the threshold value while the hybrid vehicle is located within the restriction zone when the hybrid vehicle is assumed to move along the computed route, wherein the new route is different from the computed route and at least a part of the new route is located within the allowable zone; and
a route display unit configured to display at least the new route.

7. The control system according to claim 6, wherein the route display unit is configured to display the new route together with the computed route.

8. The control system according to claim 6, wherein the route display unit is configured to display the new route without displaying the computed route.

9. The control system according to any one of claims 6 to 8, wherein the route display unit is configured to display one of the computed route and the new route which is selected by an occupant of the hybrid vehicle, and not to display the other.
